# EUROPEAN PATENT APPLICATION

(11) **EP 4 702 907 A1**
(43) Date of publication of application: **04.03.2026**
(21) Application number: 24795590.9
(22) Date of filing: 04.03.2024
(51) Int. Cl.: A47L 11/24, A47L 11/282, A47L 11/40

(54) **CONTROL METHOD AND APPARATUS FOR AUTOMATIC CLEANING DEVICE, AUTOMATIC CLEANING DEVICE, AND STORAGE MEDIUM**

(30) Priority: 27.04.2023 CN 202310477495
(71) Applicant: Beijing Roborock Innovation Technology Co., Ltd., Beijing 102206 (CN)
(72) Inventor: WANG, Kaijing, Beijing 102206 (CN)
(74) Representative: Lorenz Seidler Gossel Part. mbB
(86) International application number: PCT/CN2024/079849
(87) International publication number: WO 2024/222203

(57) **Abstract**

A control method and apparatus for an automatic cleaning device (100), an automatic cleaning device (100), and a storage medium. The automatic cleaning device (100) comprises a device body (101) and a cleaning assembly (1031) arranged at the rear portion of the device body (101), and at least part of the cleaning assembly (1031) protrudes out of the edge of the device body (101). The control method comprises: when the automatic cleaning device (100) moves along a first obstacle (301), detecting a second obstacle (302) in front of the automatic cleaning device (100) (S201); if the second obstacle (302) exists in front of the automatic cleaning device (100), acquiring the length of the second obstacle (302) (S202); and controlling a moving path of the automatic cleaning device (100) according to the length of the second obstacle (302) (S203). When the automatic cleaning device (100) turns, the interference between the cleaning assembly (1031) at the rear portion of the automatic cleaning device (100) and the first obstacle (301) and the interference between the cleaning assembly (1031) and the second obstacle (302) can be effectively reduced, and a larger cleaning coverage area can also be ensured.

## Description

### CROSS-REFERENCE TO RELATED APPLICATION

This application claims priority to Chinese Patent Application No. 202310477495.6 filed on April 27, 2023, which is incorporated herein by reference in its entirety as part of the present disclosure.

### TECHNICAL FIELD

The present disclosure relates to the technical field of smart household appliances, and in particular to a control method and apparatus for an automatic cleaning device, the automatic cleaning device and a readable storage medium.

### BACKGROUND

At present, automatic cleaning devices, when receiving cleaning instructions, can automatically execute the cleaning instructions to complete cleaning tasks, which reduces labor costs and improves cleaning efficiency. However, the automatic cleaning devices in the related art may collide with obstacles while moving, causing damage to the automatic cleaning devices or obstacles.

### SUMMARY

In view of this, the present disclosure provides a control method and apparatus for an automatic cleaning device, the automatic cleaning device and a readable storage medium, which can effectively prevent the automatic cleaning device from colliding with obstacles.

In a first aspect, an embodiment of the present disclosure provides a control method for an automatic cleaning device, where the automatic cleaning device includes a body and a cleaning assembly arranged at a rear part of the body, at least part of the cleaning assembly protrudes beyond an edge of the body, and the method includes:
detecting a second obstacle ahead of the automatic cleaning device during movement of the automatic cleaning device along a first obstacle;
acquiring a length of the second obstacle if the second obstacle is present ahead of the automatic cleaning device; and
controlling a movement path of the automatic cleaning device based on the length of the second obstacle.

In an embodiment of the present disclosure, controlling the movement path of the automatic cleaning device based on the length of the second obstacle includes: controlling the automatic cleaning device to move following a tangential path if the length of the second obstacle is less than or equal to a preset length threshold; and controlling the automatic cleaning device to move following an arc path if the length of the second obstacle is greater than the preset length threshold.

In an embodiment of the present disclosure, the method further includes: acquiring a device dimension parameter of the automatic cleaning device, and determining the preset length threshold based on the device dimension parameter.

In an embodiment of the present disclosure, controlling the automatic cleaning device to move following the tangential path includes: acquiring a device dimension parameter of the automatic cleaning device, a first distance between the automatic cleaning device and the first obstacle, and a first distance threshold; calculating, based on the device dimension parameter, the first distance and the first distance threshold, a first rotation angle of the automatic cleaning device in a case where the cleaning assembly does not interfere with the first obstacle; and detecting a second distance between the automatic cleaning device and the second obstacle, and when the second distance is less than or equal to the first distance threshold, controlling the automatic cleaning device to make a turn based on the first rotation angle, and to move following the tangential path along the second obstacle after the turn.

In an embodiment of the present disclosure, the device dimension parameter includes a radius of the body, a rear contour length of the body, and a rear contour width of the body.

In an embodiment of the present disclosure, the method further includes: acquiring a cleaning mode, determining the first distance threshold based on the cleaning mode, and/or adjusting the first rotation angle based on the cleaning mode, where different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

In an embodiment of the present disclosure, controlling the automatic cleaning device to move following the arc path includes: acquiring a device dimension parameter of the automatic cleaning device, a first distance between the automatic cleaning device and the first obstacle, a second distance threshold and a third distance threshold, where the third distance threshold is smaller than the second distance threshold; and detecting a second distance between the automatic cleaning device and the second obstacle, controlling, when the second distance is less than or equal to the second distance threshold, the automatic cleaning device to move following the arc path along the first obstacle and the second obstacle respectively, and adjusting, during movement of the automatic cleaning device following the arc path, a second rotation angle of the automatic cleaning device relative to the first obstacle, a third rotation angle of the automatic cleaning device relative to the second obstacle and a movement speed of the automatic cleaning device, thereby enabling the cleaning assembly does not interfere with the first obstacle, and the third rotation angle is less than or equal to a preset angle threshold when the second distance is less than or equal to the third distance threshold.

In an embodiment of the present disclosure, the method further includes: acquiring a cleaning mode, and determining the third distance threshold based on the cleaning mode, where different cleaning modes correspond to different obstacle protection levels and/or floor cleanliness levels; the higher the obstacle protection level is, the greater the third distance threshold is; and the higher the floor cleanliness level is, the smaller the third distance threshold is.

In an embodiment of the present disclosure, acquiring the length of the second obstacle includes: acquiring a movement duration of the automatic cleaning device along the first obstacle, and acquiring a first distance between the automatic cleaning device and the first obstacle in the movement duration; and acquiring the length of the second obstacle if the movement duration is greater than or equal to a preset duration threshold, and the first distance in the movement duration is within a preset distance range.

In a second aspect, an embodiment of the present disclosure provides a control apparatus for an automatic cleaning device, where the automatic cleaning device includes a body and a cleaning assembly arranged at a rear part of the body, at least part of the cleaning assembly protrudes beyond an edge of the body, and the apparatus includes:
a detection module, configured to detect a second obstacle ahead of the automatic cleaning device during movement of the automatic cleaning device along a first obstacle, and acquire a length of the second obstacle if the second obstacle is present ahead of the automatic cleaning device; and
a control module, configured to control a movement path of the automatic cleaning device based on the length of the second obstacle.

In an embodiment of the present disclosure, the control module is specifically configured to control the automatic cleaning device to move following a tangential path if the length of the second obstacle is less than or equal to a preset length threshold; and control the automatic cleaning device to move following an arc path if the length of the second obstacle is greater than the preset length threshold.

In an embodiment of the present disclosure, the control module is further configured to acquire a device dimension parameter of the automatic cleaning device, and determine the preset length threshold based on the device dimension parameter.

In an embodiment of the present disclosure, the apparatus further includes: a first acquisition module configured to acquire a device dimension parameter of the automatic cleaning device, a first distance between the automatic cleaning device and the first obstacle, and a first distance threshold, and a calculation module configured to calculate, based on the device dimension parameter, the first distance and the first distance threshold, a first rotation angle of the automatic cleaning device in a case where the cleaning assembly does not interfere with the first obstacle, where the detection module is further configured to detect a second distance between the automatic cleaning device and the second obstacle; and the control module is specifically configured to control, when the second distance is less than or equal to the first distance threshold, the automatic cleaning device to make a turn based on the first rotation angle, and to move following the tangential path along the second obstacle after the turn.

In an embodiment of the present disclosure, the device dimension parameter includes a radius of the body, a rear contour length of the body, and a rear contour width of the body.

In an embodiment of the present disclosure, the control module is further configured to acquire a cleaning mode, determine the first distance threshold based on the cleaning mode, and/or adjust the first rotation angle based on the cleaning mode, where different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

In an embodiment of the present disclosure, the apparatus further includes: a second acquisition module configured to acquire a device dimension parameter of the automatic cleaning device, a first distance between the automatic cleaning device and the first obstacle, a second distance threshold and a third distance threshold, where the third distance threshold is smaller than the second distance threshold; the detection module is further configured to detect a second distance between the automatic cleaning device and the second obstacle; and the control module is specifically configured to control, when the second distance is less than or equal to the second distance threshold, the automatic cleaning device to move following the arc path along the first obstacle and the second obstacle, respectively, and adjust, during movement of the automatic cleaning device following the arc path, a second rotation angle of the automatic cleaning device relative to the first obstacle, a third rotation angle of the automatic cleaning device relative to the second obstacle and a movement speed of the automatic cleaning device, thereby enabling that the cleaning assembly does not interfere with the first obstacle, and the third rotation angle is less than or equal to a preset angle threshold when the second distance is less than or equal to the third distance threshold.

In an embodiment of the present disclosure, the control module is further configured to acquire a cleaning mode, and determine the third distance threshold based on the cleaning mode, where different cleaning modes correspond to different obstacle protection levels and/or floor cleanliness levels; the higher the obstacle protection level is, the greater the third distance threshold is; and the higher the floor cleanliness level is, the smaller the third distance threshold is.

In an embodiment of the present disclosure, the detection module is specifically configured to acquire a movement duration of the automatic cleaning device along the first obstacle, and acquire a first distance between the automatic cleaning device and the first obstacle in the movement duration; and acquire the length of the second obstacle if the movement duration is greater than or equal to a preset duration threshold, and the first distance in the movement duration is within a preset distance range.

In a third aspect, an embodiment of the present disclosure provides an automatic cleaning device, including:
a body;
a cleaning assembly disposed at a rear part of the body, where at least part of the cleaning assembly protrudes beyond an edge of the body;
a memory disposed in the body, where the memory stores a program or an instruction; and
a controller disposed in the body, where the controller, when executing the program or the instruction, implements steps of the control method for the automatic cleaning device as defined in the first aspect.

In an embodiment of the present disclosure, the cleaning assembly includes at least one cleaning element that is rotatable relative to the body, and at least part of the cleaning element protrudes beyond the edge of the body.

In an embodiment of the present disclosure, the cleaning assembly includes two cleaning elements, and the two cleaning elements are arranged left and right in an advancing direction of the body.

In a fourth aspect, an embodiment of the present disclosure provides a readable storage medium storing a program or an instruction, where the program or the instruction, when executed by a controller, implements steps of the method as defined in the first aspect.

In a fifth aspect, an embodiment of the present disclosure provides a chip including a controller and a communication interface, where the communication interface is coupled to the controller, and the controller is configured to execute a program or an instruction to implement the method as defined in the first aspect.

In a sixth aspect, an embodiment of the present disclosure provides a computer program product stored in a storage medium, where the program product is executed by at least one controller to implement the method as defined in the first aspect.

In an embodiment of the present disclosure, before making a turn, the automatic cleaning device detects obstacle information at a desired turning location, then determines a dynamic turning path based on the obstacle information, and completes a turning action following the turning path. Specifically, the automatic cleaning device moves along the first obstacle while detecting the presence of an obstacle ahead of the automatic cleaning device in real time. If a second obstacle is detected existing ahead of the automatic cleaning device, the automatic cleaning device continues to detect the length of the second obstacle. Also, based on the acquired length of the second obstacle, the automatic cleaning device transitions from navigating along the first obstacle to following the second obstacle by using a different movement path.

Embodiments of the present disclosure can effectively reduce the interference between the cleaning assembly at the rear of the automatic cleaning device and the first obstacle and the second obstacle when the automatic cleaning device makes a turn, and can also ensure a larger cleaning coverage area.

The description above only provides an overview of the technical solutions of the present disclosure. The following enumerates specific embodiments of the present disclosure for a clearer understanding of the technical means of the present disclosure so as to practice it in accordance with the specification, and for a clearer understanding of the above and other objects, features and advantages of the present disclosure.

### BRIEF DESCRIPTION OF THE DRAWINGS

The accompanying drawings, illustrated here and forming part of the Description, are provided for also understanding of the present disclosure. The illustrative embodiments of the present disclosure and their description serve to explain the present disclosure, and are not intended to improperly limit the present disclosure. In these drawings:
FIG. 1 shows a structural diagram of an automatic cleaning device according to an embodiment of the present disclosure;
FIG. 2 shows a first schematic flowchart of a control method for an automatic cleaning device according to an embodiment of the present disclosure;
FIG. 3 shows a schematic diagram of an automatic cleaning device before making a turn according to an embodiment of the present disclosure;
FIG. 4 shows a second schematic flowchart of the control method for an automatic cleaning device according to an embodiment of the present disclosure;
FIG. 5 shows a schematic diagram of device dimension parameters of an automatic cleaning device according to an embodiment of the present disclosure;
FIG. 6 shows a first schematic diagram of an automatic cleaning device moving following a tangential path, according to an embodiment of the present disclosure;
FIG. 7 shows a schematic diagram of an automatic cleaning device moving following an arc path, according to an embodiment of the present disclosure;
FIG. 8 shows a second schematic diagram of an automatic cleaning device moving following a tangential path, according to an embodiment of the present disclosure; and
FIG. 9 shows a structural block diagram of a control apparatus for an automatic cleaning device according to an embodiment of the present disclosure.

The correspondence between reference signs and component names is as follows:
100-automatic cleaning device, 101-body, 102-drive system, 1021-driving wheel assembly, 1022-driven wheel, 103-cleaning system, 1031-cleaning assembly, 1032-roller brush, 1033-side brush, 301-first obstacle, and 302-second obstacle.

### DETAILED DESCRIPTION

The technical solutions in the embodiments of the present disclosure will be described clearly below with reference to the accompanying drawings in the embodiments of the present disclosure. Obviously, the embodiments described are merely some instead of all of the embodiments of the present disclosure. Based on the embodiments in the present disclosure, all other embodiments obtained by a person of ordinary skill in the art shall fall within the protection scope of the present disclosure.

The terms "first", "second" or the like used in the Description and Claims of the present disclosure are intended for distinguishing similar objects, instead of describing a specific order or sequence. It should be understood that the data used in such a fashion may be interchangeable where appropriate, such that the embodiments of the present disclosure can be implemented in an order other than those illustrated or described herein. Moreover, objects distinguished by terms such as "first," and "second" typically belong to the same class, rather than limiting the number of objects. For example, a first object may refer to one or multiple first objects. In addition, the term "and/or" in the Description and Claims indicates the inclusion of at least one of the connected objects, while the character "/" generally indicates an "or" relationship between the associated objects.

The following, with reference to the accompanying drawings, describes a method and apparatus for an automatic cleaning device, the automatic cleaning device and a readable storage medium according to the embodiments of the present disclosure by means of specific embodiments and their application scenarios.

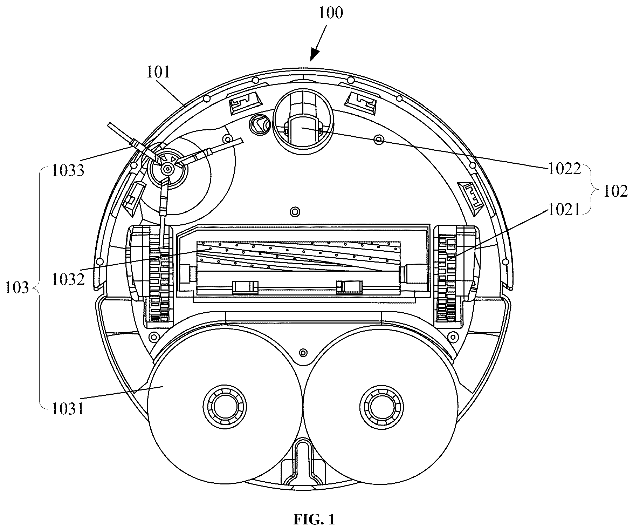

An embodiment of the present disclosure provides an automatic cleaning device, which may be a sweeping robot, a mopping robot, or an all-in-one sweeping-mopping robot. For convenience of description, the technical solution of the present disclosure is described in this embodiment by taking the all-in-one sweeping-mopping robot as an example. FIG. 1 shows a structural diagram of an automatic cleaning device according to an embodiment of the present disclosure. The automatic cleaning device 100 includes a body 101, i.e., a mobile platform, which may be either an autonomous mobile platform or a non-autonomous mobile platform. The autonomous mobile platform refers to a mobile platform that can automatically and adaptively make operation decisions by itself based on unexpected environmental inputs; and the non-autonomous mobile platform, instead of adaptively making operation decisions by itself based on unexpected environmental inputs, can execute an established program or run according to a certain logic.

A drive system 102 is disposed on the body 101 and includes a driving wheel assembly 1021 and a driven wheel 1022. The driving wheel assembly 1021 and the driven wheel 1022 are manipulated based on specific distance and angle information, to allow for traveling and steering of the automatic cleaning device.

A cleaning system 103 is also disposed on the body 101 and includes a cleaning assembly 1031, which is at least partially located outside an edge projection region of the body 101, that is, the cleaning assembly 1031 protrudes at least partially from the body 101, such that the cleaning range of the cleaning assembly 1031 can exceed the limit of the traveling range of the body 101. In this way, the edges and corners that the body cannot fit can be thoroughly cleaned to increase the cleaning range and improve the cleaning effect of the automatic cleaning device.

The cleaning system 103 also includes a liquid storage tank (not shown), below which the cleaning assembly 1031 may be disposed, and a cleaning liquid inside the liquid storage tank is transferred to the cleaning assembly 1031 to allow the cleaning assembly 1031 to clean a flat surface to be cleaned. Here, the cleaning liquid inside the liquid storage tank may also be directly sprayed to the flat surface to be cleaned, and the cleaning assembly 1031 may spread the cleaning liquid evenly to clean the flat surface to be cleaned.

In some embodiments, the cleaning assembly 1031 may be at least one cleaning element that is rotatable relative to the body 101. The cleaning element may include a rotary disc and a water-absorbing flexible material such as fabric and sponge disposed at the bottom of the rotary disc. The flexible material rotates with the rotary disc to evenly spread the cleaning liquid on a surface to be cleaned. Specifically, as shown in FIG. 1, the cleaning elements may be bilaterally symmetrically disposed at the bottom of the body of the automatic cleaning device.

It should be noted that the cleaning system 103 also includes a motion mechanism, by which the entire cleaning assembly 1031 may be installed on the body. The cleaning assembly 1031 moves with the movement of the body to achieve the functions of mopping and sweeping. Here, the motion mechanism is configured to drive the cleaning element to execute an action. For example, the motion mechanism may drive the cleaning element to raise and lower, or drive the cleaning element to rotate. In this way, the raising/lowering and rotating operation of the cleaning element can be achieved by means of the motion mechanism depending on whether the cleaning element is required to be in contact with the surface to be cleaned, thereby meeting different functional requirements of the cleaning element. It should be noted that, when the cleaning element interferes with the surface to be cleaned for mopping operations, the motion mechanism drives the cleaning element to rotate.

In some embodiments, the cleaning system 103 also includes a roller brush 1032, which has certain interference with the floor to thus sweep up debris from the floor and draw it into a dust box; and the cleaning system 103 also includes a side brush 1033, which has a rotary shaft that is at a certain angle relative to the floor so as to move the debris into a roller brush region.

In some embodiments, the automatic cleaning device includes a controller, which is configured to control the driving system 102, the cleaning system 103 and the like to enable the automatic cleaning device to perform cleaning tasks.

In a case where the cleaning element is disposed at the rear of body of the automatic cleaning device, the cleaning element may interfere with obstacles on either side of an inner corner when the automatic cleaning device makes a turn along the inner corner, since the cleaning element is at least partially located outside the edge projection region of the body 101. As a result, the traveling posture of the automatic cleaning device is affected to cause scratches on the surfaces of the obstacles.

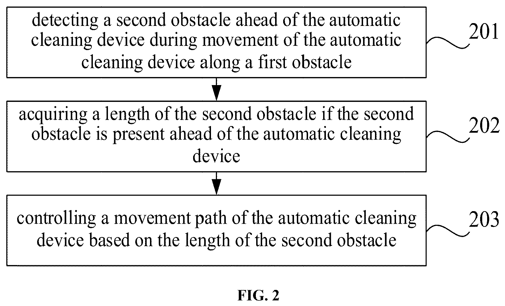

Hence, an embodiment of the present disclosure provides a control method for an automatic cleaning device. As shown in FIG. 2, the method includes the following steps.

In step 201, a second obstacle ahead of the automatic cleaning device is detected during movement of the automatic cleaning device along a first obstacle.

In step 202, a length of the second obstacle is acquired if the second obstacle is present ahead of the automatic cleaning device.

In step 203, a movement path of the automatic cleaning device is controlled based on the length of the second obstacle.

In this embodiment of the present disclosure, before making a turn, the automatic cleaning device detects obstacle information at a desired turning location by using a detection apparatus of the automatic cleaning device, and then, the controller determines a dynamic turning path based on the obstacle information, and controls the driving system to enable the body to complete a turning action following the turning path.

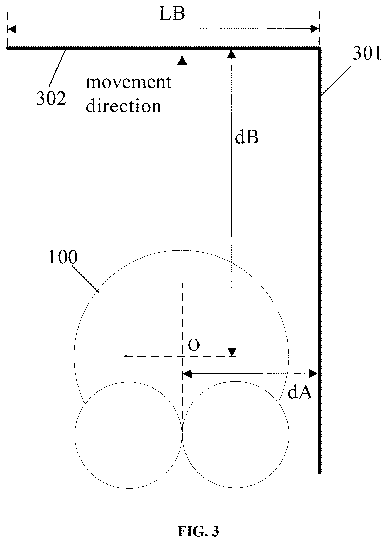

Specifically, the automatic cleaning device moves along the first obstacle while detecting the presence of an obstacle ahead of the automatic cleaning device in real time by using the detection apparatus. If a second obstacle is detected existing ahead of the automatic cleaning device, the automatic cleaning device continues to detect the length of the second obstacle. Exemplarily, as shown in FIG. 3, the right side of the automatic cleaning device 100 moves forward along the first obstacle 301. In case of detecting the presence of a second obstacle 302 ahead during the movement, the length LB of the second obstacle is detected.

Here, the first obstacle and the second obstacle include walls, furniture, pillars, etc.

Also, based on the acquired length of the second obstacle, the controller enables the automatic cleaning device to transition from navigating along the first obstacle to following the second obstacle, by using a different movement path.

The embodiment of the present disclosure can effectively reduce the interference between the cleaning assembly at the rear of the automatic cleaning device and the first obstacle and the second obstacle when the automatic cleaning device makes a turn, and can ensure a larger cleaning coverage area.

In an embodiment of the present disclosure, acquiring the length of the second obstacle includes: acquiring a movement duration of the automatic cleaning device along the first obstacle, as well as a first distance between the automatic cleaning device and the first obstacle in the movement duration; and acquiring the length of the second obstacle if the movement duration is greater than or equal to a preset duration threshold, and the first distance in the movement duration is within a preset distance range.

In this embodiment, when the automatic cleaning device travels forward relative to the first obstacle, it is necessary to acquire the first distance between the automatic cleaning device and the first obstacle by means of the detection apparatus so as to ensure the cleaning effect of the automatic cleaning device on the edge of the first obstacle.

The above-mentioned detection apparatus may be a wall-following sensor, for example, an infrared sensor disposed on the side of the body, or a laser docking sensor (LDS) disposed on the top or side of the body. With the use of the above detection apparatus, as shown in FIG. 3, the first distance dA between the determined center O of the automatic cleaning device and the first obstacle may be acquired, and the actual distance between the automatic cleaning device and the second obstacle may be determined based on the first distance dA and the dimension parameters of the body of the automatic cleaning device.

When the automatic cleaning device continuously travels along the first obstacle and approaches the second obstacle ahead, i.e., at the intersection between the first obstacle and the second obstacle: first, the controller calculates a movement time tA taken by the automatic cleaning device 100 to travel forward along the first obstacle, with the movement time tA and the first distance dA together serving as trigger conditions for acquiring the length of the second obstacle.

If it is determined that the movement time tA is greater than or equal to a preset duration threshold, and the first distance dA remains within the preset distance range during the movement time tA, this indicates that the automatic cleaning device and the first obstacle are in a stable parallel state during the movement time tA, such that subsequent actions can be prevented from failing to achieve a desired effect, and the length of the second obstacle can be then acquired.

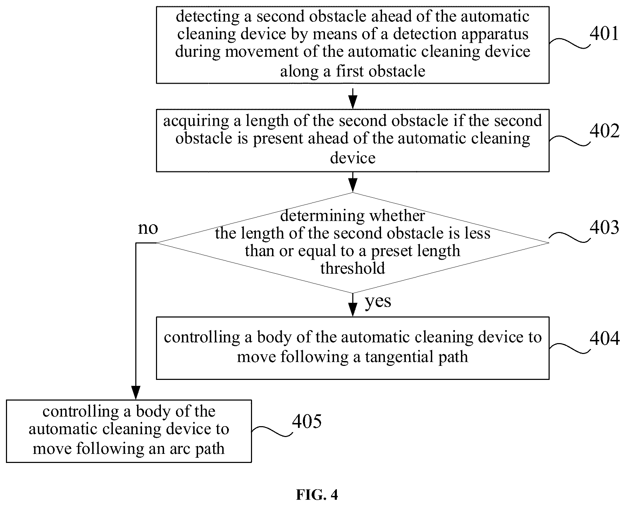

As a refinement and extension of the above embodiment, an embodiment of the present disclosure provides another control method for an automatic cleaning device. As shown in FIG. 4, the method includes the following steps.

In step 401, a second obstacle ahead of the automatic cleaning device is detected by means of a detection apparatus during movement of the automatic cleaning device along a first obstacle.

In step 402, a length of the second obstacle is acquired if the second obstacle is present ahead of the automatic cleaning device.

In step 403, whether the length of the second obstacle is less than or equal to a preset length threshold is determined, and if it is determined that the length of the second obstacle is less than or equal to the preset length threshold, the process proceeds to step 404, or else, step 405.

In step 404, the body of the automatic cleaning device is controlled to move following a tangential path.

In step 405, the body of the automatic cleaning device is controlled to move following an arc path.

Steps 401 and 402 are identical or similar to steps 201 and 202 above, which will not be repeated here.

In this embodiment, after acquiring the length LB of the second obstacle, the controller selects a mode for a subsequent turning action based on the magnitude relationship between the length LB of the second obstacle and the preset length threshold.

Specifically, if the length LB of the second obstacle is less than or equal to the preset length threshold, the second obstacle is considered shorter, which may be a short board or pillar, and a tangent mode is then selected for the turning action. That is, the second obstacle is relatively short, an inner corner region of turn, as formed by the second obstacle and the first obstacle, has a small area, and the automatic cleaning device may pass along the edge of the first obstacle. In this way, the automatic cleaning device can be avoided from interfering with the obstacle. Moreover, due to the small area of the inner corner region of turn, i.e., due to the small area to be cleaned, the automatic cleaning device in the tangent mode will not be significantly affected in the cleaning coverage of the inner corner region of turn, and meanwhile may cleaning rapidly.

If the length LB of the second obstacle is greater than the preset length threshold, turning in the tangent mode may cause a collision with the edge of the second obstacle, and a relatively large area of uncleaned region will occur in the inner corner region of turn. Therefore, it is necessary to select an arc mode for the turning action so as to avoid interference between the automatic cleaning device and the obstacle and increase the cleaning coverage area.

In any one of the above technical solutions, optionally, the method further includes: acquiring a device dimension parameter of the automatic cleaning device, and determining the preset length threshold based on the device dimension parameter.

In this embodiment, if the length LB of the second obstacle is too short, the wall-following sensor of the automatic cleaning device may lose detection of the second obstacle after the automatic cleaning device makes a turn, and the controller may take the distance from a turning start point to a position, where the wall-following sensor exactly loses the detection of the second obstacle, as the preset length threshold. Here, the wall-following sensor is typically disposed on the side of the automatic cleaning device. If the automatic cleaning device moves with its right side following the wall, the wall-following sensor is disposed on the right side of the body; and if the automatic cleaning device moves with its left side following the wall, the wall-following sensor is disposed on the left side of the body.

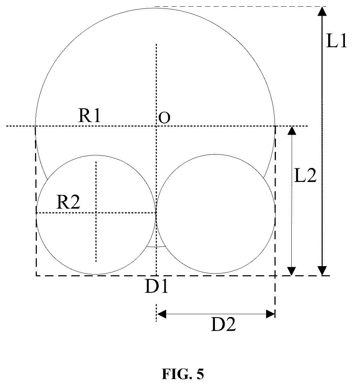

In an embodiment, the controller takes the total length of the automatic cleaning device as the preset length threshold. As shown in FIG. 5, the device dimension parameter of the automatic cleaning device includes the total length L1 of the automatic cleaning device, the rear contour length L2 of the body, the radius R1 of the body, the radius R2 of the cleaning element, the total width D1 of the automatic cleaning device, the rear contour width D2 of the body, etc. Here, the rear contour length L2 of the body is the difference between the total length L1 of the automatic cleaning device and the radius R1 of the body, and the rear contour width D2 of the body is one half of the total width D1 of the automatic cleaning device.

Due to different device dimensions of different models of automatic cleaning devices, the corresponding preset length threshold is determined based on the device dimensions of the current automatic cleaning device, such that the turning mode can be determined more accurately, and the collision between the automatic cleaning device and the obstacles can be also prevented.

In any one of the above technical solutions, optionally, controlling the automatic cleaning device to move following the tangential path includes: acquiring a device dimension parameter of the automatic cleaning device, a first distance between the automatic cleaning device and the first obstacle, and a first distance threshold; calculating, based on the device dimension parameter, the first distance and the first distance threshold, a first rotation angle of the automatic cleaning device in a case where the cleaning assembly does not interfere with the first obstacle; and detecting a second distance between the automatic cleaning device and the second obstacle, and controlling, when the second distance is less than or equal to the first distance threshold, the automatic cleaning device to make a turn based on the first rotation angle, and to move along the second obstacle following the tangential path after the turn.

In this embodiment, in a case where the length LB of the second obstacle is less than or equal to the preset length threshold, the controller acquires the device dimension parameter of the automatic cleaning device, the first distance dA between the automatic cleaning device and the first obstacle, and the first distance threshold dQ. Here, the first distance threshold dQ is the minimum distance threshold for tangential turning, and the device dimension parameter includes the radius R1 of the body, the rear contour length L2 of the body and the rear contour width D2 of the body. Based on the device dimension parameter, the first distance and the first distance threshold, the maximum rotation angle that the automatic cleaning device can achieve without interference between the cleaning element and the first obstacle, i.e., the first rotation angle θ1, is calculated in real time.

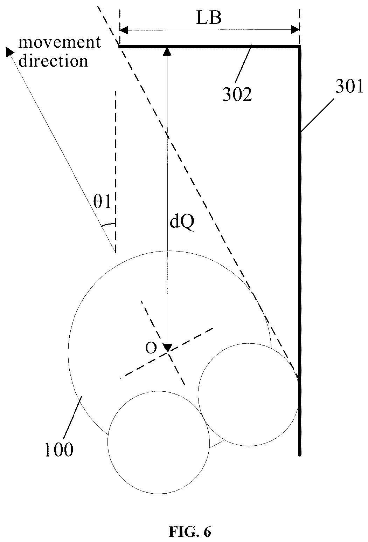

Also, the second distance dB between the center O of the automatic cleaning device and the second obstacle ahead is acquired in real time by means of the detection apparatus (as shown in FIG. 3), and the controller continuously monitors the magnitude relationship between the second distance dB and the length LB of the second obstacle. After it is determined that the second distance dB is less than or equal to the first distance threshold dQ, the controller controls the body to perform a turning action. As shown in FIG. 6, after rotating by the first rotation angle θ1, the body moves to the second obstacle along the tangential path. When reaching the second obstacle, the automatic cleaning device just tangentially passes by the outer edge of the second obstacle.

In the above-mentioned way, it can be ensured that the automatic cleaning device does not interfere with the first obstacle when making a turn, and that the automatic cleaning device can successfully pass by the second obstacle.

After the second obstacle is passed by the automatic cleaning device, new distance information is reacquired using the wall-following sensor, and moving along the obstacle is resumed.

In any one of the above technical solutions, optionally, the method further includes: acquiring a cleaning mode, determining the first distance threshold based on the cleaning mode, and/or adjusting the first rotation angle based on the cleaning mode, where different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

In this embodiment, a user may set the cleaning mode, and different cleaning modes correspond to different obstacle protection levels and/or floor cleanliness levels. The obstacle protection level refers to the level of tolerance for scratches to obstacles, and the floor cleanliness level refers to the level of tolerance for a cleaning coverage area.

The controller acquires a cleaning mode set by the user before cleaning and determines a first distance threshold based on the obstacle protection level and/or floor cleanliness level corresponding to the cleaning mode. The controller may also adjust the first rotation angle based on the obstacle protection level and/or floor cleanliness level corresponding to the cleaning mode. Specifically, if the user prefers to protect obstacles, the value of the first distance threshold dQ is increased to enable the automatic cleaning device to make a turn when it is farther away from the second obstacle; and the value of the first rotation angle θ1 is decreased, that is, the turning angle relative to the first obstacle is smaller, such that the automatic cleaning device is ensured to maintain a certain distance margin relative to both the first obstacle and the second obstacle during tangential turning movement.

If the user prefers to minimize uncleaned regions, the value of the first distance threshold dQ is decreased, and the first rotation angle θ1 is made approach a calculated theoretical value, such that the tangential turning movement is made more extreme and closer to the first obstacle and the second obstacle.

It should be noted that the method for setting a cleaning mode by a user is not specifically defined in the embodiments of the present disclosure. For example, the user sets the cleaning mode by means of an App installed on his/her terminal, which then sends information on the set cleaning mode to the automatic cleaning device, and the cleaning mode may be set by clicking or voice input in the App; or the user selects or inputs the cleaning mode in a user interaction interface of the automatic cleaning device; or, the automatic cleaning device has a voice recognition function, allowing for direct analysis of the user's voice to determine the cleaning mode.

In the above-mentioned way, the distance between the automatic cleaning device and the first obstacle and the second obstacle during the tangential turning movement can be determined according to the needs of the user to meet the cleaning needs of the user.

In any one of the above technical solutions, optionally, controlling the automatic cleaning device to move following the arc path includes: acquiring a device dimension parameter of the automatic cleaning device, a first distance between the automatic cleaning device and the first obstacle, a second distance threshold and a third distance threshold, where the third distance threshold is smaller than the second distance threshold; and detecting a second distance between the automatic cleaning device and the second obstacle, controlling, when the second distance is less than or equal to the second distance threshold, the automatic cleaning device to move following an arc path along the first obstacle and the second obstacle, respectively, and adjusting, during movement of the automatic cleaning device following the arc path, a second rotation angle of the automatic cleaning device relative to the first obstacle, a third rotation angle of the automatic cleaning device relative to the second obstacle and a movement speed of the automatic cleaning device, thereby enabling that the cleaning assembly does not interfere with the first obstacle, and the third rotation angle is less than or equal to a preset angle threshold when the second distance is less than or equal to the third distance threshold.

In this embodiment, in a case where the length LB of the second obstacle is greater than the preset length threshold, the controller fits the linear coordinates of the second obstacle in the coordinate system of the automatic cleaning device by using data information acquired during acquisition of the length LB of the second obstacle, and combines the position coordinates and heading information of the automatic cleaning device in a navigation coordinate system at the moment to obtain a second rotation angle θ2 of the movement direction of the automatic cleaning device relative to the first obstacle, and a third rotation angle θ3 of the movement direction of the automatic cleaning device relative to the second obstacle.

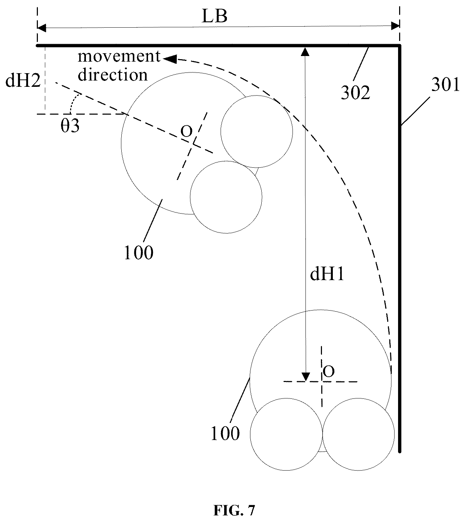

As shown in FIG. 7, the controller acquires the first distance dA between the automatic cleaning device and the first obstacle, and the second distance dB between the automatic cleaning device and the second obstacle ahead. When the second distance dB is less than or equal to the minimum distance threshold for the arc turning, i.e., the second distance threshold dH1, the automatic cleaning device is controlled to switch from linear motion along the first obstacle to arc-following motion. During the arc-following motion, the steering speed and the movement speed of the automatic cleaning device are dynamically adjusted by real-time detection of the changes of the first distance dA, the second distance dB and the third rotation angle θ3, to achieve the following two purposes:
(1) the first distance dA is always greater than the maximum rear contour width of the body of the automatic cleaning device after conversion with the second rotation angle θ2, in order to ensure that the cleaning assembly does not interfere with the first obstacle; and
(2) the second distance dB and the third rotation angle θ3 continuously decrease, and when the second distance dB is less than or equal to a third distance threshold, the third rotation angle θ3 is exactly reduced to a preset angle threshold (for example, 0°).

By simultaneously achieving the above two purposes, it is possible to ensure that the automatic cleaning device can significantly increase the cleaning coverage area during the entire arc turning phase as compared to the tangential turning action, and to ensure that, when reaching the vicinity of the second obstacle, the automatic cleaning device can initiate a new parallel movement relative to the second obstacle without collision of the front and sides of the automatic cleaning device with the obstacle.

In an embodiment of the present disclosure, the method further includes: acquiring a cleaning mode, and determining the third distance threshold based on the cleaning mode, where different cleaning modes correspond to different obstacle protection levels and/or floor cleanliness levels; the higher the obstacle protection level is, the greater the third distance threshold is; and the higher the floor cleanliness level is, the smaller the third distance threshold is.

In this embodiment, the corresponding third distance threshold is selected based on the cleaning mode set by the user. Here, different cleaning modes correspond to different obstacle protection levels and/or floor cleanliness levels. The obstacle protection level refers to the level of tolerance for scratches to obstacles, and the floor cleanliness level refers to the level of tolerance for a cleaning coverage area.

The controller acquires the cleaning mode set by the user before cleaning and determines the third distance threshold based on the obstacle protection level and/or floor cleanliness level corresponding to the cleaning mode. Specifically, if the user prefers to protect obstacles, the value of the third distance threshold is increased to ensure that the automatic cleaning device maintains a certain distance margin relative to the second obstacle during the arc turning movement.

If the user prefers to minimize uncleaned regions, the value of the third distance threshold is decreased, to enable the tangential turning movement to become more extreme and closer to the second obstacle.

It should be noted that the method for setting a cleaning mode by a user is not specifically defined in the embodiments of the present disclosure. For example, the user sets the cleaning mode by means of an App installed on his/her terminal, which then sends information on the set cleaning mode to the automatic cleaning device, and the cleaning mode may be set by clicking or voice input in the App; or the user selects or inputs the cleaning mode in a user interaction interface of the automatic cleaning device; or, the automatic cleaning device has a voice recognition function, allowing for direct analysis of the user's voice to determine the cleaning mode.

In the above-mentioned way, the distance between the automatic cleaning device and the second obstacle during the arc turning movement can be determined according to the needs of the user to meet the cleaning needs of the user.

In an embodiment of the present disclosure, the method further includes: selecting a tangent mode for the turning action in a case where sensor failure occurs or the special material or shape of the second obstacle causes the sensor to fail in accurately measuring the length of the second obstacle and only allows the sensor to vaguely sense the distance to the second obstacle.

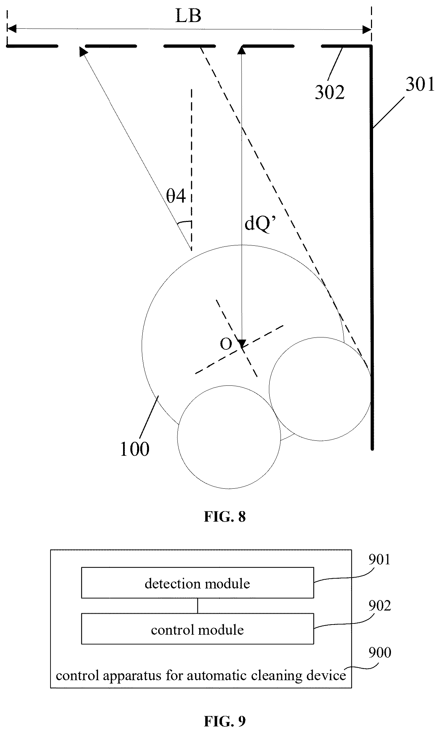

As shown in FIG. 8, when the length LB of the second obstacle cannot be sensed, the controller dynamically selects a corresponding trigger distance threshold dQ by means of the cleaning mode set by the user and achieves tangential turning by using a pre-set tangential angle θ4. This solution will cause the front of the automatic cleaning device to interfere with the second obstacle when the automatic cleaning device tangentially travels to the second obstacle, if the actual length of the second obstacle is greater than dA + dQ × tan(θ4), with dA indicating the first distance between the automatic cleaning device and the first obstacle. At this point, an additional sensor such as a collision sensor, a vision sensor or a line laser sensor is required to sense the second distance to the second obstacle when approaching, such that the automatic cleaning device is controlled to steer in situ at an appropriate distance punctually, aligning itself parallel to the second obstacle before resuming obstacle-following movement.

As a specific implementation of the control method for an automatic cleaning device described above, an embodiment of the present disclosure provides a control apparatus for an automatic cleaning device; the automatic cleaning device includes a body and a cleaning assembly arranged at the rear part of the body; and the cleaning assembly protrudes at least in part from an edge of the body. As shown in FIG. 9, the apparatus 900 for controlling an automatic cleaning device includes a detection module 901 and a control module 902.

Here, the detection module 901 is configured to detect a second obstacle ahead of the automatic cleaning device during movement of the automatic cleaning device along a first obstacle, and acquire a length of the second obstacle if the second obstacle is present ahead of the automatic cleaning device; and
the control module 902 is configured to control a movement path of the automatic cleaning device based on the length of the second obstacle.

In this embodiment, before making a turn, the automatic cleaning device detects obstacle information at a desired turning location, then determines a dynamic turning path based on the obstacle information, and completes a turning action following the turning path. Specifically, the automatic cleaning device moves along the first obstacle while detecting the presence of an obstacle ahead of the automatic cleaning device in real time. If a second obstacle is detected existing ahead of the automatic cleaning device, the automatic cleaning device continues to detect the length of the second obstacle. Further, based on the acquired length of the second obstacle, the automatic cleaning device transitions from navigating along the first obstacle to following the second obstacle by using a different movement path.

The embodiment of the present disclosure can effectively reduce the interference between the cleaning assembly at the rear of the automatic cleaning device and the first obstacle and the second obstacle when the automatic cleaning device makes a turn, and can also ensure a larger cleaning coverage area.

Further, the control module 902 is specifically configured to control the automatic cleaning device to move following a tangential path if the length of the second obstacle is less than or equal to a preset length threshold; and control the automatic cleaning device to move following an arc path if the length of the second obstacle is greater than the preset length threshold.

Further, the control module 902 is further configured to acquire a device dimension parameter of the automatic cleaning device, and determine the preset length threshold based on the device dimension parameter.

Further, the apparatus further includes: a first acquisition module configured to acquire a device dimension parameter of the automatic cleaning device, a first distance between the automatic cleaning device and the first obstacle, and a first distance threshold, and a calculation module configured to calculate, based on the device dimension parameter, the first distance and the first distance threshold, a first rotation angle of the automatic cleaning device in a case where the cleaning assembly does not interfere with the first obstacle, where the detection module 901 is further configured to detect a second distance between the automatic cleaning device and the second obstacle; and the control module 902 is specifically configured to control, when the second distance is less than or equal to the first distance threshold, the automatic cleaning device to make a turn based on the first rotation angle, and to move along the second obstacle following the tangential path after the turn.

Further, the device dimension parameter includes a radius of the body, a rear contour length of the body, and a rear contour width of the body.

Further, the control module 902 is further configured to acquire a cleaning mode, determine the first distance threshold based on the cleaning mode, and/or adjusting the first rotation angle based on the cleaning mode, where different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

Further, the apparatus further includes: a second acquisition module configured to acquire a device dimension parameter of the automatic cleaning device, a first distance between the automatic cleaning device and the first obstacle, a second distance threshold and a third distance threshold, where the third distance threshold is smaller than the second distance threshold; the detection module 901 is further configured to detect a second distance between the automatic cleaning device and the second obstacle; and the control module 902 is specifically configured to control, when the second distance is less than or equal to the second distance threshold, the automatic cleaning device to move following an arc path along the first obstacle and the second obstacle, respectively, and adjust, during movement of the automatic cleaning device following the arc path, a second rotation angle of the automatic cleaning device relative to the first obstacle, a third rotation angle of the automatic cleaning device relative to the second obstacle and a movement speed of the automatic cleaning device, thereby enabling that the cleaning assembly does not interfere with the first obstacle, and the third rotation angle is less than or equal to a preset angle threshold when the second distance is less than or equal to the third distance threshold.

Further, the control module 902 is further configured to acquire a cleaning mode, and determine the third distance threshold based on the cleaning mode, where different cleaning modes correspond to different obstacle protection levels and/or floor cleanliness levels; the higher the obstacle protection level is, the greater the third distance threshold is; and the higher the floor cleanliness level is, the smaller the third distance threshold is.

Further, the detection module 901 is specifically configured to acquire a movement duration of the automatic cleaning device along the first obstacle, as well as a first distance between the automatic cleaning device and the first obstacle in the movement duration; and acquire the length of the second obstacle if the movement duration is greater than or equal to a preset duration threshold, and the first distance in the movement duration is within a preset distance range.

The apparatus 900 for controlling the automatic cleaning device according to the embodiment of the present disclosure can effect various processes implemented in the embodiments of the control method for an automatic cleaning device as shown in FIGs. 2 and 4, which will not be described in detail here in order to avoid repetition.

An embodiment of the present disclosure also provides an automatic cleaning device. As shown in FIG. 1, the automatic cleaning device includes:
a body 101;
a cleaning assembly 1031 disposed at a rear part of the body 101, where the cleaning assembly 1031 protrudes at least in part from an edge of the body 101;
a memory (not shown in the drawings) disposed in the body 101, the memory storing a program or an instruction; and
a controller (not shown in the drawings) disposed in the body 101, the controller, when executing the program or the instruction, implementing various steps in the embodiment of the control method for an automatic cleaning device as described above, whereby the same technical effect can be achieved, which will not be described in detail here in order to avoid repetition.

Here, the memory may be configured to store a software program and various data. The memory may primarily include a first storage region for storing programs or instructions and a second storage region for storing data. The first storage region may store an operating system, and an application or instruction required for at least one function (such as a sound playback function or an image playback function). In addition, the memory may include a volatile memory, or a non-volatile memory, or both. Here, the non-volatile memory may be a read-only memory (ROM), a programmable ROM (PROM), an erasable PROM (EPROM), an electrically EPROM (EEPROM), or a flash memory. The volatile memory may be a random-access memory (RAM), a static RAM (SRAM), a dynamic RAM (DRAM), a synchronous DRAM (SDRAM), a double data rate SDRAM (DDRSDRAM), an enhanced SDRAM (ESDRAM), a Synch link DRAM (SLDRAM); and a direct Rambus RAM (DRRAM). The memory in the embodiment of the present disclosure includes, but is not limited to these and other suitable types of memories.

The controller may include one or more processing units; and optionally, the controller integrates an application controller and a modem controller. Here, the application controller mainly processes operations involving operating systems, user interfaces, applications, etc., and the modem controller (such as a baseband controller) mainly processes wireless communication signals. It can be understood that the above-mentioned modem controller may not be integrated into the controller.

Further, the cleaning assembly 1031 includes at least one cleaning element that is rotatable relative to the body, and at least part of the cleaning element protrudes beyond the edge of the body.

Further, two cleaning elements are provided, which are arranged on left and right sides of the body in a traveling direction.

An embodiment of the present disclosure also provides a readable storage medium storing a program or an instruction therein. The program or the instruction, when executed by a controller, implements processes in the embodiment of the control method for an automatic cleaning device, whereby the same technical effect can be achieved, which will not be described in detail here in order to avoid repetition.

An embodiment of the present disclosure also provides a chip including a controller and a communication interface. The communication interface is coupled to the controller, and the controller is configured to execute a program or an instruction to implement processes in the embodiment of the control method for an automatic cleaning device as described above, whereby the same technical effect can be achieved, which will not be described in detail here in order to avoid repetition.

It should be understood that the chip mentioned in the embodiment of the present disclosure may also be referred to as a system-level chip, a system chip, a chip system, or a system-on-chip, etc.

An embodiment of the present disclosure also provides a computer program product stored in a storage medium. The program product is executed by at least one controller to implement each process in the embodiment of the control method for an automatic cleaning device, whereby the same technical effect can be achieved, which will not be described in detail here in order to avoid repetition.

It should be noted that the terms "comprise", "include" or any other variants thereof are intended to cover nonexclusive inclusion, such that a process, method, article or apparatus including a series of elements include not only those elements, but also other elements that are not listed explicitly, or also elements inherent to such a process, method, article or apparatus. Without more limitations, the element defined by the phrase "comprising a ..." does not exclude the existence of other identical elements in the process, method, article or apparatus that includes this element. In addition, it should be noted that the scope of the methods and apparatuses in the embodiments of the present disclosure is not limited to the execution of functions in the order shown or discussed, and may also include the execution of functions in a substantially simultaneous manner or in an opposite order according to the involved functions. For example, the described methods may be performed in a different order than the described order, and various steps may also be added, omitted, or combined. In addition, features described with reference to some examples may be combined in other examples.

The above describes the embodiments of the present disclosure with reference to the accompanying drawings. However, the present disclosure is not limited to the specific implementations mentioned above, which are merely illustrative and not restrictive. Under the teaching of the present disclosure, those of ordinary skill in the art may also make many variations without departing from the spirit of the present disclosure and the scope claimed by the claims, and all such variations shall fall within the protection of the present disclosure.

## Claims

1. A control method for an automatic cleaning device, **characterized in that** the automatic cleaning device comprises a body and a cleaning assembly disposed at a rear part of the body, at least part of the cleaning assembly protrudes beyond an edge of the body, and the method comprises:
detecting a second obstacle ahead of the automatic cleaning device during movement of the automatic cleaning device along a first obstacle;
acquiring a length of the second obstacle if the second obstacle is present ahead of the automatic cleaning device; and
controlling a movement path of the automatic cleaning device based on the length of the second obstacle.

2. The method according to claim 1, wherein the controlling the movement path of the automatic cleaning device based on the length of the second obstacle comprises:
controlling the automatic cleaning device to move following a tangential path if the length of the second obstacle is less than or equal to a preset length threshold; and
controlling the automatic cleaning device to move following an arc path if the length of the second obstacle is greater than the preset length threshold.

3. The method according to claim 2, further comprising:
acquiring a device dimension parameter of the automatic cleaning device, and determining the preset length threshold based on the device dimension parameter.

4. The method according to claim 2, wherein the controlling the automatic cleaning device to move following the tangential path comprises:
acquiring a device dimension parameter of the automatic cleaning device, a first distance between the automatic cleaning device and the first obstacle, and a first distance threshold;
calculating, based on the device dimension parameter, the first distance and the first distance threshold, a first rotation angle of the automatic cleaning device in a case where the cleaning assembly does not interfere with the first obstacle; and
detecting a second distance between the automatic cleaning device and the second obstacle, and when the second distance is less than or equal to the first distance threshold, controlling the automatic cleaning device to make a turn based on the first rotation angle and to move following the tangential path along the second obstacle after the turn.

5. The method according to claim 4, wherein the device dimension parameter comprises a radius of the body, a rear contour length of the body, and a rear contour width of the body.

6. The method according to claim 4, further comprising:
acquiring a cleaning mode; and
determining the first distance threshold based on the cleaning mode, and/or adjusting the first rotation angle based on the cleaning mode;
wherein different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

7. The method according to claim 2, wherein the controlling the automatic cleaning device to move following the arc path comprises:
acquiring a device dimension parameter of the automatic cleaning device, a first distance between the automatic cleaning device and the first obstacle, a second distance threshold and a third distance threshold, wherein the third distance threshold is smaller than the second distance threshold; and
detecting a second distance between the automatic cleaning device and the second obstacle, and when the second distance is less than or equal to the second distance threshold, controlling the automatic cleaning device to move following the arc path along the first obstacle and the second obstacle respectively, and
adjusting, during movement of the automatic cleaning device following the arc path, a second rotation angle of the automatic cleaning device relative to the first obstacle, a third rotation angle of the automatic cleaning device relative to the second obstacle, and a movement speed of the automatic cleaning device, thereby enabling that the cleaning assembly does not interfere with the first obstacle, and the third rotation angle is less than or equal to a preset angle threshold when the second distance is less than or equal to the third distance threshold.

8. The method according to claim 7, further comprising:
acquiring a cleaning mode, and determining the third distance threshold based on the cleaning mode;
wherein different cleaning modes correspond to different obstacle protection levels and/or floor cleanliness levels; the higher the obstacle protection level is, the greater the third distance threshold is; and the higher the floor cleanliness level is, the smaller the third distance threshold is.

9. The method according to any one of claims 1 to 8, wherein the acquiring the length of the second obstacle comprises:
acquiring a movement duration of the automatic cleaning device along the first obstacle, and acquiring a first distance between the automatic cleaning device and the first obstacle in the movement duration; and
acquiring the length of the second obstacle if the movement duration is greater than or equal to a preset duration threshold and the first distance in the movement duration is within a preset distance range.

10. A control apparatus for an automatic cleaning device, **characterized in that** the automatic cleaning device comprises a body and a cleaning assembly disposed at a rear part of the body, at least part of the cleaning assembly protrudes beyond an edge of the body, and the apparatus comprises:
a detection module, configured to detect a second obstacle ahead of the automatic cleaning device during movement of the automatic cleaning device along a first obstacle, and acquire a length of the second obstacle if the second obstacle is present ahead of the automatic cleaning device; and
a control module, configured to control a movement path of the automatic cleaning device based on the length of the second obstacle.

11. The apparatus according to claim 10, wherein the control module is specifically configured to:
control the automatic cleaning device to move following a tangential path if the length of the second obstacle is less than or equal to a preset length threshold; and
control the automatic cleaning device to move following an arc path if the length of the second obstacle is greater than the preset length threshold.

12. The apparatus according to claim 11, wherein
the control module is further configured to acquire a device dimension parameter of the automatic cleaning device, and determine the preset length threshold based on the device dimension parameter.

13. The apparatus according to claim 11, further comprising:
a first acquisition module, configured to acquire a device dimension parameter of the automatic cleaning device, a first distance between the automatic cleaning device and the first obstacle, and a first distance threshold, and
a calculation module, configured to calculate, based on the device dimension parameter, the first distance and the first distance threshold, a first rotation angle of the automatic cleaning device in a case where the cleaning assembly does not interfere with the first obstacle, wherein
the detection module is further configured to detect a second distance between the automatic cleaning device and the second obstacle; and
the control module is specifically configured to control, when the second distance is less than or equal to the first distance threshold, the automatic cleaning device to make a turn based on the first rotation angle, and to move following the tangential path along the second obstacle after the turn.

14. The apparatus according to claim 13, wherein the device dimension parameter comprises a radius of the body, a rear contour length of the body, and a rear contour width of the body.

15. The apparatus according to claim 13, wherein
the control module is further configured to acquire a cleaning mode, determine the first distance threshold based on the cleaning mode, and/or adjust the first rotation angle based on the cleaning mode; and
wherein different cleaning modes correspond to different obstacle protection levels and/or floor cleanliness levels; the higher the obstacle protection level is, the greater the first distance threshold is, and the smaller the first rotation angle is; and the higher the floor cleanliness level is, the smaller the first distance threshold is, and the greater the first rotation angle is.

16. The apparatus according to claim 11, further comprising:
a second acquisition module, configured to acquire a device dimension parameter of the automatic cleaning device, a first distance between the automatic cleaning device and the first obstacle, a second distance threshold and a third distance threshold, wherein the third distance threshold is smaller than the second distance threshold; wherein
the detection module is further configured to detect a second distance between the automatic cleaning device and the second obstacle; and
the control module is specifically configured to control, when the second distance is less than or equal to the second distance threshold, the automatic cleaning device to move following the arc path along the first obstacle and the second obstacle respectively, and adjust, during movement of the automatic cleaning device following the arc path, a second rotation angle of the automatic cleaning device relative to the first obstacle, a third rotation angle of the automatic cleaning device relative to the second obstacle, and a movement speed of the automatic cleaning device, thereby enabling that the cleaning assembly does not interfere with the first obstacle, and the third rotation angle is less than or equal to a preset angle threshold when the second distance is less than or equal to the third distance threshold.

17. The apparatus according to claim 16, wherein
the control module is further configured to acquire a cleaning mode, and determine the third distance threshold based on the cleaning mode, and
wherein different cleaning modes correspond to different obstacle protection levels and/or floor cleanliness levels; the higher the obstacle protection level is, the greater the third distance threshold is; and the higher the floor cleanliness level is, the smaller the third distance threshold is.

18. The apparatus according to any one of claims 10 to 17, wherein the detection module is specifically configured to:
acquire a movement duration of the automatic cleaning device along the first obstacle, and acquire a first distance between the automatic cleaning device and the first obstacle in the movement duration; and
acquire the length of the second obstacle if the movement duration is greater than or equal to a preset duration threshold, and the first distance in the movement duration is within a preset distance range.

19. An automatic cleaning device, **characterized by** comprising:
a body;
a cleaning assembly, disposed at a rear part of the body, wherein at least part of the cleaning assembly protrudes beyond an edge of the body;
a memory, disposed in the body, wherein the memory stores a program or an instruction; and
a controller, disposed in the body, wherein the controller, when executing the program or the instruction, implements steps of the control method for the automatic cleaning device according to any one of claims 1 to 9.

20. The device according to claim 19, wherein
the cleaning assembly comprises at least one cleaning element that is rotatable relative to the body, and at least part of the cleaning element protrudes beyond the edge of the body.

21. The device according to claim 20, wherein
the cleaning assembly comprises two cleaning elements, and the two cleaning elements are arranged left and right in an advancing direction of the body.

22. A readable storage medium, storing a program or an instruction, **characterized in that** the program or the instruction, when executed by a controller, implements steps of the control method for the automatic cleaning device according to any one of claims 1 to 9.
